# EUROPEAN PATENT SPECIFICATION

(11) **EP 3 472 079 B1**
(45) Date of publication and mention of the grant of the patent: **30.11.2022**
(21) Application number: 17736765.3
(22) Date of filing: 16.06.2017
(51) Int. Cl.: B65G 61/00

(54) **PALLETIZING AND/OR DEPALLETIZING SYSTEM OF GOODS WITH DRONES**
PALETTIER- UND/ODER DEPALETTIERSYSTEM VON WAREN MIT DROHNEN
SYSTÈME DE PALETTISATION ET/OU DE DÉPALETTISATION DE MARCHANDISES AVEC DES DRONES

(30) Priority: 17.06.2016 IT UA20164478
(43) Date of publication of application: 24.04.2019
(73) Proprietor: Simac Tech S.r.l., 41042 Fiorano Modenese (MO) (IT)
(72) Inventor: RUINI, Fabio, 41042 Fiorano Modenese (MO) (IT)
(74) Representative: Luppi, Emanuele
(86) International application number: PCT/IB2017/053590
(87) International publication number: WO 2017/216766

(56) References cited:
- EP-A1- 2 886 493
- WO-A1-2016/030797
- US-A1- 2016 068 264
- Jaco Hooijer: "Qimarox examines the use of drones for palletising | Qimarox", , 27 January 2014 (2014-01-27), XP055363052, Retrieved from the Internet: URL:http://www.qimarox.com/news/qimarox-ex amines-the-use-of-drones-for-palletising-3 671.html [retrieved on 2017-04-07]
- Kevin Capodice: "Adapting Drones for Modern Material Handling | The Material Handling Blog", , 4 December 2015 (2015-12-04), pages 1-4, XP055363057, Retrieved from the Internet: URL:https://www.bastiansolutions.com/blog/ index.php/2015/12/04/adapting-drones-for-m aterial-handling/#.WOeW5HpMfSg [retrieved on 2017-04-07]

## Description

### Technical Field

The present invention relates to a palletizing and/or depalletizing system of goods.

### Background Art

Within the scope of the present invention, by the term palletizing is meant the action of arranging packs or goods on top of pallets, e.g. stacked on top of one another; at the same time, by the term depalletizing is meant the action of picking up packs, or goods previously palletized on pallets.

In the particular field of the handling and transport of goods packaged e.g. inside of packs, packages, bags or the like, the use is known of pallets or platforms, more commonly known as pallets, generally made of wood, plastic, metal or pressed chipboard.

The pallets are used to transport packs arranged on the pallets themselves and packed to obtain palletized packs that can be logistically managed for storage in warehouses or shipment or placing on the market.

The palletizing and/or depalletizing systems of known type generally comprise automated anthropomorphic robots interposed between a first handling station and a second handling station and adapted to handle packs between the first handling station and the second handling station, or vice versa.

The automated anthropomorphic robots of known type have an articulated arm provided with an extremity fitted on a rotating platform for the movement of the arm along four movement axes.

The other extremity of the articulated arm of the automated anthropomorphic robot has a gripper, if necessary rotatable around its own axis, by means of which the packs to be handled are picked up.

Generally, the first handling station is arranged at an industrial machine adapted to package and obtain packs, while the second handling station is adapted to support and move the pallets on which the automated anthropomorphic robots place the packs coming from the first handling station.

The second handling station is adapted, in turn, to handle the pallets loaded with the packs and afterwards packaged for relative logistics management.

More in detail, the automated anthropomorphic robots are adapted to transfer the packs arranged on the first handling station on top of the pallets arranged on the second handling station so as to stack such packs, e.g., the one on the other or according to different layouts, to obtain the required packaging. Alternatively, the automated anthropomorphic robots are adapted to pick up the packs arranged on the pallets conveyed on the second handling station and to displace such packs onto the first handling station.

In other words, such automated anthropomorphic robots are adapted to unwrap the packages for the pickup and transfer of the packs contained in them from one handling station to another.

These automated anthropomorphic robots of known type do have a number of drawbacks.

The main drawback is tied to the fact that the operation of the stations of known type is not very practical due to their structural complexity, and to the large overall dimensions of the automated anthropomorphic robots positioned on the ground, with consequent need for large spaces in which to position such stations.

It follows therefore that the costs to be borne by the customer in case of malfunctions or faults are quite high.

Another drawback is tied to any malfunctions or faults affecting one or more of the appliances making up the stations of known type which require the entire station to be stopped with consequent interruption of the production process until such malfunctions or faults have been completely remedied.

Yet another drawback is tied to the lack of production efficiency and the long time required for palletizing/depalletizing the packs in the cases wherein the distance between the first handling station and the second handling station is great, or in case of large quantities of packs to be palletized/depalletized.

Not the least drawback is tied to the difficulty in managing pack handling between a plurality of first handling stations and a plurality of second handling stations.

In particular, the pack handling operations are particularly complex in the cases when the packs themselves have to be moved between the first and the second handling stations arranged misaligned the one with the other.

Some handling systems are disclosed in the non-patent documents Jaco Hooijer: "Qimarox examines the use of drones for palletizing | Qimarox", and Kevin Capodice: "Adapting Drones for Modern Material Handling | The Material Handling Blog". The documents disclose a palletizing system according to the preamble of claim 1.

### Description of the Invention

The main aim of the present invention is to provide a palletizing/depalletizing station of goods which has poor structural complexity and small overall dimensions.

One object of the present invention is to provide a palletizing/depalletizing station of goods that permits cutting slowdown in production in cases of malfunctions or faults with a consequent reduction in the costs to be borne by the customer for the assistance and maintenance jobs.

Another object of the present invention is to provide a palletizing/depalletizing station of goods which permits maximizing production efficiency and cutting the time needed for the palletizing/depalletizing operations, in particular in cases of handling large quantities of packs, and simplifying the management of pack movement between handling stations which are misaligned the one with the other.

Another object of the present invention is to provide a palletizing/depalletizing system of goods which allows to overcome the mentioned drawbacks of the prior art within the scope of a simple, rational, easy, effective to use and low cost solution.

The above mentioned objects are achieved by the present palletizing/depalletizing system of goods having the features of claim 1.

### Brief Description of the Drawings

Other characteristics and advantages of the present invention will become more evident from the description of a preferred, but not exclusive, embodiment of a palletizing/depalletizing system of goods, illustrated by way of an indicative, but non-limiting example in the accompanying drawings, wherein:

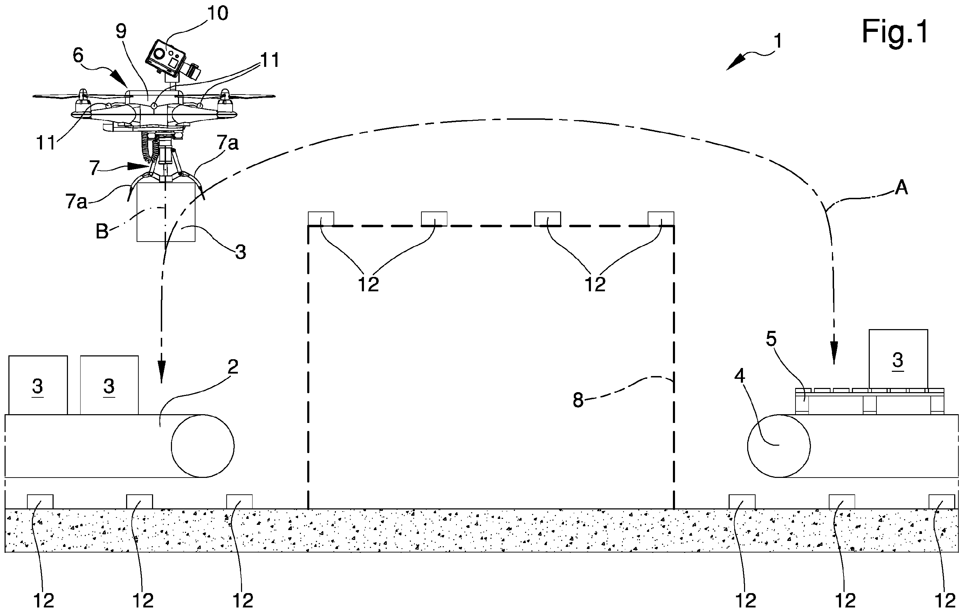

Figure 1 is a side view of a system according to the invention;

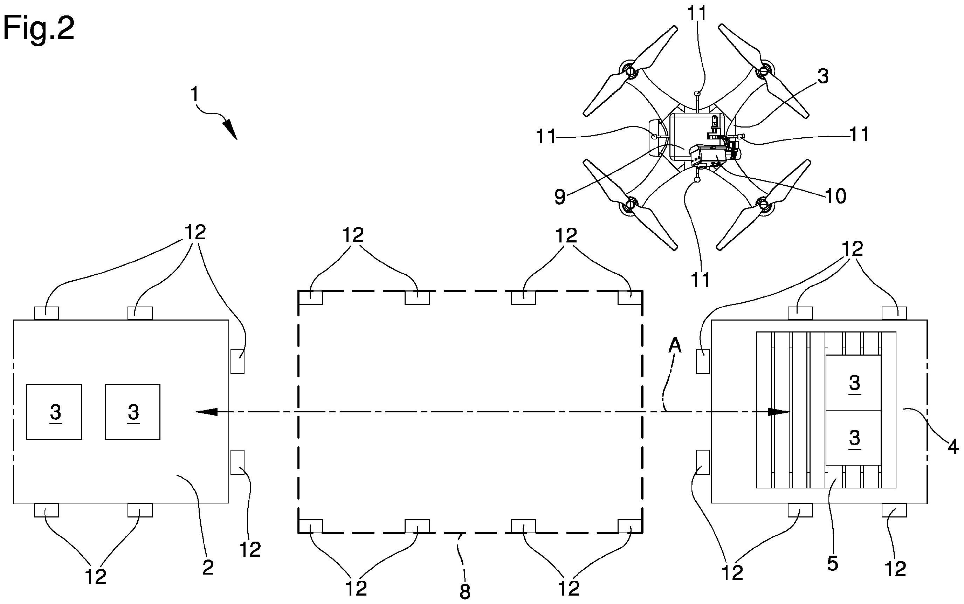

Figure 2 is a top view of the system according to the invention;

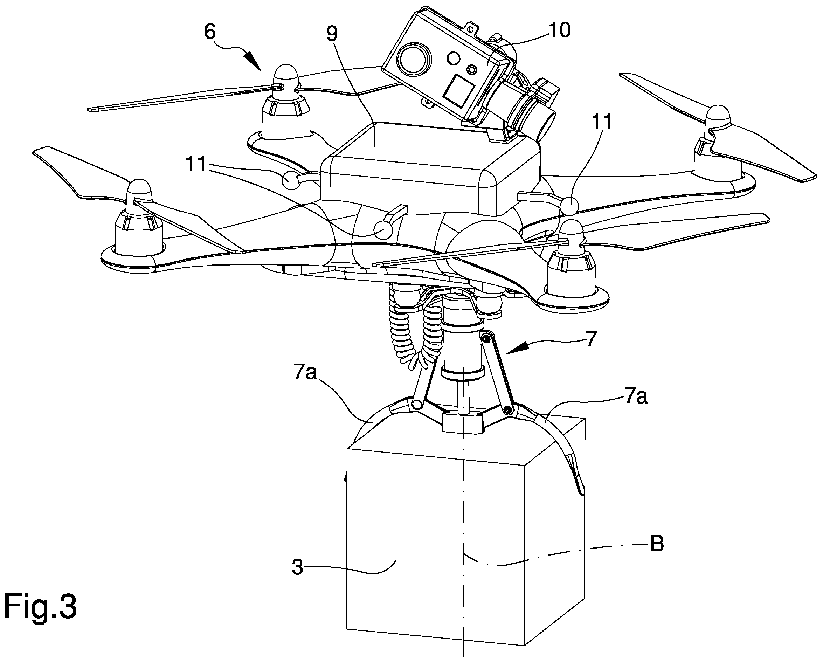

Figure 3 is an axonometric view of a detail of the system according to the invention.

### Embodiments of the Invention

With particular reference to these illustrations, globally indicated with reference numeral 1 is a palletizing and/or depalletizing system of goods.

Within the scope of the present discussion, by the term palletizing is meant the operation for the orderly arrangement of a plurality of packs or the like above a pallet, e.g., placed side by side and/or stacked on top of one another on the pallet itself so they are ready for shipment.

By the term depalletizing, on the other hand, is meant the operation of picking up the packs orderly arranged above the pallet.

The system 1 comprises:
- a first handling station 2 of a plurality of packs 3 to be palletized/depalletized;
- a second handling station 4 of a plurality of packs 3 to be palletized/depalletized;
- at least a pallet 5 arranged at at least one of the first handling station 2 and the second handling station 4, the pallet 5 being adapted to support the packs 3 and/or to pick the packs 3 positioned on the pallet itself;
- transfer means 6 of the packs 3 between the handling stations 2, 4.

In the embodiment shown by way of example in the illustrations, the system 1 comprises a single first handling station 2 and a single second handling station 4.

Alternative embodiments cannot however be ruled out in which the system 1 comprises a plurality of first handling stations 2 and a plurality of second handling stations 4.

The handling stations 2, 4 are fastened to the ground and are provided with a conveyor belt, or a roller element, which permits the packs 3 arranged on them to move forwards.

The first handling station 2 is adapted to move packs 3, coming for example from an industrial production line by means of which is achieved the packaging of the packs themselves, of the type of rolls of paper or the like, towards the transfer means 6.

The second handling station 4 is adapted to support one or more pallets 5 on which the packs 3 to be palletized are arranged by means of the transfer means 6 or, alternatively, the packs 3 to be depalletized are picked up.

Following the palletizing operations, the pallet 5 and the packs 3 arranged on it are moved by means of the second handling station 4 and placed, for example, in specific storage warehouses for logistics management and relative shipment.

According to the invention, the transfer means 6 comprise a drone having a gripper 7 adapted to grip/release the packs 3 and movable along an aerial trajectory A for transferring the packs 3 between the handling stations 2, 4.

Within the scope of the present discussion, by the expression aerial trajectory is meant one or more different paths which the drone 6 covers in flight in the air space which separates the handling stations 2, 4.

According to the invention, the system 1 comprises a reticular element 8 fastened to the ground and arranged at a predefined distance from the ground itself and adapted to define a safety area, interposed between the ground and the reticular element 8 and devoid of the movement of the drone 6 in its interior, and a work area, arranged on top of the reticular element 8 and inside which the drone 6 is movable in flight along the aerial trajectory A.

In particular, the safety area is adapted to the safe transit of the operators between the handling stations 2, 4, protecting the operator during such transit and keeping him/her safe from any collisions due to flight problems affecting the drone 6.

The aerial trajectory A is defined between the first handling station 2 and the second handling station 4, and vice versa, and extends substantially on top of the reticular element 8 in the work area.

Alternative embodiments cannot be ruled out wherein the system 1 comprises a plurality of reticular elements 8 arranged in the air space between one of the first handling stations 2 and one of the second handling stations 4 aligned the one with the other.

In the embodiment illustrated by way of example in the figures, the transfer means 6 are provided with a single drone, but it cannot be ruled out that the transfer means 6 comprise a plurality of drones.

Usefully, each drone 6 covers an aerial trajectory A which defines the path for the movement of the packs 3 from one of the first handling stations 2 to one of the second handling stations 4 or vice versa.

The drone 6 comprises a base frame 9, adapted to support the gripper 7, and a navigation system 10, 11 adapted to the navigation and the movement of the drone 6 along the aerial trajectory A.

The drone 6 is arranged in a reference position in which the base frame 9 is substantially horizontal and parallel to the ground.

The base frame 9 comprises a supporting surface, which in the reference position is facing the ground, with which the gripper 7 is associated.

With regards to the reference position, the gripper 7 extends overhanging towards the ground with respect to the supporting surface.

It cannot be ruled out that the gripper 7 is movable in rotation around a relative axis of rotation B, thus providing a further degree of freedom for the movement of the flying drone 6.

In the reference position, this axis of rotation B is substantially transverse to the base frame 9.

Alternative embodiments cannot however be ruled out wherein the drone 6 comprises movement means associated with the base frame 9 and which are adapted to support the gripper 7 for the movement of the gripper itself along a direction substantially parallel to the axis of rotation B, in such a way that the gripper 7 has freedom of movement close to/away from the base frame 9. More in detail, the gripper 7 comprises a pair of arm elements 7a switchable between a grip configuration, wherein the arm elements 7a are approached to each other for the grip of one of the packs 3 arranged on one of the handling stations 2, 4, and a release configuration, wherein the arm elements 7a are moved away from each other for the release of the pack 3 on the other of the handling stations 2, 4.

In the preferred embodiment shown by way of example in the illustrations, the drone 6 is provided with a single gripper 7, but alternative embodiments cannot however be ruled out wherein the drone 6 is provided with a plurality of grippers 7 associated with the supporting surface of the base frame 9.

In this alternative embodiment, the grippers 7 are suitably spaced apart to one another so that, in the grip configuration, the packs 3 are moved away from one another so as to avoid any collisions between the packs themselves.

Advantageously, the drone 6 is movable along a plurality of movement axes in three-dimensional space so that the aerial trajectory A covered between two handling stations 2, 4 has a curvilinear pattern that extends in the air space comprised between the first handling station 2 and the second handling station 4.

The drone 6 therefore has degrees of freedom of movement with respect to the three movement axes, i.e., the drone 6 can rotate around each of the movement axes in order to vary its orientation with respect to the reference position.

The system 1 is switchable between:
- a palletizing configuration, wherein the drone 6 is adapted to pick up the packs 3 from one of the handling stations 2, 4 devoid of the pallet 5, e.g. the first handling station 2, and to support these packs 3 orderly stacked on top of the pallet 5 which is arranged on the other of the handling stations 2, 4, e.g. the second handling station 4; and
- a depalletizing configuration, wherein the drone 6 is adapted to pick up the packs 3 to be depalletized arranged on top of the pallet 5, which is in turn arranged on one of the handling stations 2, 4, e.g. the second handling station 4, and to support these packs 3 on the other of the handling stations 2, 4, e.g. the first handling station 2.

Both in the palletizing configuration and in the depalletizing configuration, the drone 6 is movable in flight and covers the path defined by the aerial trajectory A that develops in the work area and that connects the handling stations 2, 4 to each other.

Preferably, the navigation system 10, 11 comprises:
- a driving device which is associated with the base frame 9 and adapted to store the path defining the aerial trajectory A and to pilot the drone 6 in the movement along the aerial trajectory itself between the first handling station 2 and the second handling station 4, or vice versa;
- image acquisition means 10 associated with the base frame 9 and adapted to acquire photographic frames regarding the area surrounding the drone 6 for the detection of the packs 3 and of the pallet 5;
- detection means 11 adapted to detect the position of the handling stations 2, 4 and the aerial trajectory A;
- a management unit operatively connected to the driving device, to the image acquisition means 10, to the detection means 11 and adapted to pilot the drone 6 along the aerial trajectory A.

Alternative embodiments cannot be ruled out wherein, e.g., the navigation system 10, 11 is only provided with one of the image acquisition means 10 and the detection means 11.

The management unit is an electronic unit for the automatic control of the movement of the drone 6 which can be suitably configured and programmed by the operator according to the required flight needs.

It cannot be ruled out that the management unit be an electronic unit for the control of the movement of the drone 6 having manual command means whereby the operator can manually regulate the operation of the management unit itself.

Furthermore, the management unit is operatively connected to the gripper 7 and is adapted to switch between the grip configuration and the release configuration and vice versa.

Preferably, the driving device is provided with at least one of a GPS and/or LPS unit, telemetric devices, optical and/or laser devices each of which is operatively connected to the management unit for the movement and guide of the drone 6 along the aerial trajectory A according to the characteristics and the obstacles present in the space surrounding the drone 6 and along the aerial trajectory A.

It cannot be ruled out that the driving device comprises both telemetric devices, optical or laser devices and at least one of a GPS and/or LPS unit, operatively connected together and to the management unit so that the movement of the drone 6 between the handling stations 2, 4 follows the path of the aerial trajectory A as precisely as possible.

The fact is underlined that the LPS unit is adapted to provide the management unit with the coordinates to guide the drone 6 with reference to the work area only.

The driving device can be configured by an operator by means of the management unit so as to define the aerial trajectory A which the drone 6 has to cover.

The image acquisition means 10 are selected from at least one camera and at least one 3D vision sensor.

In the embodiment shown in the illustrations, the image acquisition means 10 comprise a camera 10 associated with the base frame 9 by means of which the photographic frames are taken of the space surrounding the drone 6.

Usefully, the management unit is adapted to process such photographic frames taken using the camera 10 to identify the packs 3 and/or the pallet 5 arranged on the handling stations 2, 4.

Alternative embodiments cannot however be ruled out in which the image acquisition means 10 comprise one or more 3D vision sensors adapted to detect 3D scenes of the space surrounding the drone 6.

The management unit is therefore adapted to regulate the driving device according to the precise position of the pallets 5 and of the packs 3 obtained by means of the processing of the photographic frames so as to recalculate and/or correct the aerial trajectory A which the drone 6 has to cover for the correct identification of the pallets 5 and of the packs 3, in the event of the aerial trajectory A pre-set in the driving device being different to the aerial trajectory A which the drone 6 actually has to cover.

The detection means 11 comprise at least one of a proximity sensor and a proximity remote sensing device.

Preferably, the detection means 11 comprise a plurality of proximity sensors associated with the base frame 9 in the proximity of the perimeter sides of the supporting surface.

The proximity sensors 11 are selected from: laser proximity sensors, infrared proximity sensors, ultrasonic proximity sensors, microwave proximity sensors and electromagnetic proximity sensors.

More in detail, each proximity sensor 11 has emitting means for emitting electromagnetic waves within a pre-defined space, variable according to the type of proximity sensor itself, and means of detection of the electromagnetic waves reflected by the ground, by the handling stations 2, 4, by the packs 3 and by the pallets 5 arranged on the handling stations 2, 4 which are located in the area inside the range of operation of the emitting means themselves. Preferably, the selected proximity sensor 11 is a laser proximity sensor in which the emitting means are of the type of a laser emitting infrared or visible light radiation.

It cannot be ruled out that the detection means 11 comprise, in addition to the proximity sensor, also at least one proximity remote sensing device.

In this specific case, the proximity remote sensing device is adapted to obtain information on the space and on the surrounding objects and spaced apart from the proximity sensing device itself by means of the measuring of the emitted, reflected or transmitted electromagnetic radiations, which interact with such surfaces of interest.

More in detail, such proximity remote sensing device is adapted to detect the information which permits obtaining the data relating to the coordinates of the aerial trajectory A which has to be covered by the drone 6.

The information read by the proximity remote sensing device is processed by the management unit, which in turn is adapted to regulate the driving device to obtain the coordinates relating to the correct aerial trajectory A which the drone 6 has to cover.

Usefully, the system 1 comprises signaling means 12 operatively connected to the detection means 11 and adapted to reflect the electromagnetic radiations emitted by the proximity sensors 11 arranged at the handling stations 2, 4 and in the space interposed between the handling stations 2, 4, or along the path that the drone 6 has to cover between the first handling station 2 and the second handling station 4.

Advantageously, the signaling means 12 are arranged in the proximity of the handling stations 2, 4 so as to define delimiting areas which allow the navigation system 10, 11 to carry out a simple detection of the handling stations themselves.

In the preferred embodiment shown in the illustrations, the signaling means 12 are associated above the reticular element 8 in pre-established positions so as to keep the drone 6 at a distance from the reticular element 8 and prevent these colliding.

The operation of the present invention is as follows.

Following the configuration of the aerial trajectory A by means of the management unit, the drone 6 moves close to the first handling station 2 to grip one of the packs 3 sliding on the corresponding conveyor belt.

The light radiation emitted by the proximity sensors 11 is reflected by the signaling means 12 and such reflected light radiation is detected by the proximity sensors 11 and processed by the management unit for comparison and control with the position relating to the first handling station 2 set in the aerial trajectory A.

In the case of the light signal which is reflected and detected by the proximity sensors 11, and processed by the management unit, detecting that the position of the drone 6 is different with respect to the aerial trajectory A, then the management unit reconfigures the driving device so as to correct the aerial trajectory itself.

The camera 10 takes the photographic frames and the management unit processes such frames to identify the packs 3.

Once the gripper 7 is in the proximity of the pack 3, the management unit is adapted to switch the arm elements 7a between the release configuration and the grip configuration for gripping the pack 3.

The drone 6 flies away from the first handling station 2 and covers the aerial trajectory A, the coordinates of which are pre-set in the driving device and is detected by means of the signaling means 12 arranged at the reticular element 8. The drone 6 flies within the work area and at a distance from the reticular element 8 such as to avoid any collision with the reticular element itself.

Once it is in the proximity of the second handling station 4, the drone 6, by means of the proximity sensors 11, detects the signaling means 12 which delimit the second handling station 4 and the camera 10 detects the position of the pallet 5 arranged on the conveyor belt.

The drone 6 moves close to the pallet 5 and the management unit is adapted to pilot the gripper 7 in the switch between the grip configuration and the release configuration to rest the pack 3 above the pallet 5.

Such palletizing configuration of the system 1 is repeated for a number of cycles equal to the number of packs 3 to be conveyed from the handling station 2 to the handling station 4 until the packs are arranged in an orderly manner above the pallet 5.

The operating mode of the system 1 in the depalletizing configuration is substantially similar to the palletizing configuration.

In particular, the drone 6 is adapted to pick up each of the packs 3 arranged on the pallet 5 and to fly from the second handling station 4 to the first handling station 2 along the aerial trajectory A to transport such packs 3 to the first handling station 2.

It has in practice been ascertained how the described invention achieves the intended objects and in particular the fact is underlined that the palletizing/depalletizing system of goods made this way permits optimizing the spaces inside production facilities, by means of the use of the air space which in normal conditions would remain unused, and has reduced overall dimensions. Furthermore, the use of drones to transport goods between different production stations considerably reduces the complexity of the traffic and the routes which such goods have to cover between the handling stations in the systems of known type.

More in detail, the system made this way is without the way stations in the event of the goods having to be transported between first and second stations which are misaligned the one with the other.

The use of air space permits increasing or reducing the number of drones depending on the required productivity and the quantity of packs to be palletized/depalletized, thereby adapting consumption to the operating conditions actually required.

The system made this way has low costs and a reduction of the assistance and maintenance costs to be borne by the customer inasmuch as, in the case of a breakdown of one or more drones, only the drones which are involved in the malfunctions need be repaired, and the other drones can be kept operating thereby preventing any interruption of the production process.

This therefore results in an increase in productivity and a reduction in machine down times which slow down the production process.

## Claims

1. Palletizing and/or depalletizing system (1) of packs (3) or goods, comprising:
- at least one first handling station (2) of a plurality of packs (3) to be palletized/depalletized, said at least one first handling station (2) being fastened to the ground and provided with a conveyor belt, or a roller element, which permits said packs (3) arranged on it to move forwards;
- at least one second handling station (4);
- at least one pallet (5) arranged at said at least one second handling station (4), said at least one pallet (5) being adapted to support said packs (3) to be palletized/depalletized;
- transfer means (6) of said packs (3) to be palletized/depalletized between said at least one first handling station (2) and said at least one second handling station (4), wherein said transfer means (6) comprise at least a drone (6) having at least a gripper (7) adapted to grip/release said packs (3) to be palletized/depalletized, said drone (6) being movable along at least an aerial trajectory (A) for transferring said packs (3) to be palletized/depalletized between said at least one first handling station (2) and said at least one second handling station (4);
characterized said at least one second handling station (4) is fastened to the ground and is provided with a conveyor belt, or a roller element, which supports said at least one pallet (5) and permits said at least one pallet (5) arranged on it to move forwards, and in that the palletizing and/or depalletizing system (1) comprises at least a reticular element (8) arranged at a predefined distance from the ground and adapted to define at least a safety area, arranged between the ground and said reticular element (8) and devoid of the handling of said drone (6) in its interior, and at least a work area, arranged on top of said reticular element (8) and inside which said drone (6) is movable along said aerial trajectory (A), said aerial trajectory (A) being defined between said at least one first handling station (2) and said at least one second handling station (4), and vice versa, and extends substantially on top of said reticular element (8) in the work area.

2. System (1) according to claim 1, **characterized by** the fact that said drone (6) comprises at least a base frame (9) adapted to support said gripper (7) and at least a navigation system (10, 11) adapted to the navigation and the handling of said drone (6) along said aerial trajectory (A).

3. System (1) according to claim 2, **characterized by** the fact that said gripper (7) is movable in rotation around a relative axis of rotation (B), said axis of rotation (B) being substantially transverse to said base frame (9).

4. System (1) according to one or more of the preceding claims, **characterized by** the fact that said gripper (7) comprises at least a pair of arm elements (7a) switchable between a gripping configuration, wherein said arm elements (7a) are approached to each other for the grip of at least one of said packs (3) arranged on one of said handling stations (2, 4), and a release configuration, wherein said arm elements (7a) are moved away from each other for the release of said pack (3) on the other of said handling stations (2, 4).

5. System (1) according to one or more of the preceding claims, **characterized by** the fact that it comprises signaling means (12) operatively connected to said navigation system (10, 11) and arranged at at least one of said handling stations (2, 4) and in the space arranged between said handling stations (2, 4) to define said aerial trajectory (A), said signaling means (12) being adapted to signal said handling stations (2, 4) and said aerial trajectory (A).

6. System (1) according to claim 5, **characterized by** the fact that said navigation system (10, 11) comprises at least one of:
- a driving device adapted to store the path defining said aerial trajectory (A) and to pilot said drone (6) in the handling along said aerial trajectory (A) between one of said handling stations (2, 4) and the other of said handling stations (2, 4), said driving device being associated with said base frame (9);
- image acquisition means (10) adapted to acquire frames relevant to the area surrounding said drone (6) for the detection of said packs (3) and of said pallet (5), said image acquisition means (10) being associated with said base frame (9);
- detection means (11) operatively connected to said signaling means (12) and adapted to detect the position of said handling stations (2, 4) and said aerial trajectory (A);
- at least a management unit operatively connected to said driving device, to said image acquisition means (10) and to said detection means (11) and adapted to pilot said drone (6) along said aerial trajectory (A).

7. System (1) according to claim 6, **characterized by** the fact that said image acquisition means (10) comprise at least one of a camera and 3D vision sensors.

8. System (1) according to claim 6 or 7, **characterized by** the fact that said detection means (11) comprise at least one of at least a proximity sensor and at least a proximity remote sensing device.

9. System (1) according to claim 8, **characterized by** the fact that said proximity sensor (11) is selected from: laser proximity sensors, infrared proximity sensors, ultrasonic proximity sensors, microwave proximity sensors and electromagnetic proximity sensors.

10. System (1) according to one or more of the preceding claims, **characterized by** the fact that it is switchable between:
- a palletizing configuration, wherein said drone (6) is adapted to pick said packs (3) from one of said handling stations (2, 4) devoid of said pallet (5) and to support said packs (3) stacked on top of said pallet (5), said pallet (5) being arranged on the other of said handling stations (2, 4); and
- a depalletizing configuration, wherein said drone (6) is adapted to pick said packs (3) arranged at one of said handling stations (2, 4) and to support said packs (3) on the other of said handling stations (2, 4) devoid of said pallet (5).

## Patentansprüche

1. Palettier- und/oder Depalettiersystem (1) von Packungen (3) oder Waren, umfassend:
- mindestens eine erste Handhabungsstation (2) für eine Vielzahl von zu palettierenden/ depalettierenden Packungen (3), wobei die mindestens eine erste Handhabungsstation (2) am Boden befestigt und mit einem Förderband oder einem Rollenelement versehen ist, das eine Vorwärtsbewegung der darauf angeordneten Packungen (3) ermöglicht;
- mindestens eine zweite Handhabungsstation (4);
- mindestens eine Palette (5), die an der mindestens einen zweiten Handhabungsstation (4) angeordnet ist, wobei die mindestens eine Palette (5) ausgebildet ist, die zu palettierenden/ depalettierenden Packungen (3) zu tragen;
- Beförderungsmittel (6) der zu palettierenden/ depalettierenden Packungen (3) zwischen der mindestens einen ersten Handhabungsstation (2) und der mindestens einen zweiten Handhabungsstation (4), wobei die Beförderungsmittel (6) mindestens eine Drohne (6) mit mindestens einem Greifer (7) umfassen, der zum Greifen/ Freigeben der zu palettierenden/ depalettierenden Packungen (3) geeignet ist, wobei die Drohne (6) entlang mindestens einer Flugbahn (A) beweglich ist, um die zu palettierenden/ depalettierenden Packungen (3) zwischen der mindestens einen ersten Handhabungsstation (2) und der mindestens einen zweiten Handhabungsstation (4) zu befördern;
**dadurch gekennzeichnet, dass** die mindestens eine zweite Handhabungsstation (4) am Boden befestigt und mit einem Förderband oder einem Rollenelement versehen ist, das die mindestens eine Palette (5) trägt und es der mindestens einen darauf angeordneten Palette (5) ermöglicht, sich vorwärts zu bewegen, und dass das Palettier- und/oder Depalettiersystem (1) mindestens ein netzförmiges Element (8) umfasst, das in einem vordefinierten Abstand vom Boden angeordnet und ausgebildet ist, mindestens einen Sicherheitsbereich, der zwischen dem Boden und dem netzartigen Element (8) angeordnet ist und in dem die Drohne (6) nicht gehandhabt werden kann, und mindestens einen Arbeitsbereich zu definieren, der oberhalb des netzartigen Elements (8) angeordnet ist und in dem die Drohne (6) entlang der Flugbahn (A) beweglich ist, wobei die Flugbahn (A) zwischen der mindestens einen ersten Handhabungsstation (2) und der mindestens einen zweiten Handhabungsstation (4) und umgekehrt definiert ist und sich im Wesentlichen oberhalb des netzartigen Elements (8) in dem Arbeitsbereich erstreckt.

2. System (1) nach Anspruch 1, **dadurch gekennzeichnet, dass** die Drohne (6) mindestens einen Grundrahmen (9), der ausgebildet ist, den Greifer (7) zu tragen, und mindestens ein Navigationssystem (10, 11) umfasst, das für die Navigation und die Handhabung der Drohne (6) entlang der Flugbahn (A) ausgebildet ist.

3. System (1) nach Anspruch 2, **dadurch gekennzeichnet, dass** der Greifer (7) um eine relative Drehachse (B) drehbar ist, wobei die Drehachse (B) im Wesentlichen quer zu dem Grundrahmen (9) verläuft.

4. System (1) nach einem oder mehreren der vorhergehenden Ansprüche, **dadurch gekennzeichnet, dass** der Greifer (7) mindestens ein Paar Armelemente (7a) umfasst, die zwischen einer Greifkonfiguration, in der die Armelemente (7a) zum Greifen mindestens einer der auf einer der Handhabungsstationen (2, 4) angeordneten Packungen (3) aufeinander zubewegt sind, und einer Freigabekonfiguration, in der die Armelemente (7a) zum Freigeben der Packung (3) auf der anderen der Handhabungsstationen (2, 4) voneinander wegbewegt sind, umschaltbar sind.

5. System (1) nach einem oder mehreren der vorhergehenden Ansprüche, **dadurch gekennzeichnet, dass** es Signalisierungsmittel (12) umfasst, die betriebsmäßig mit dem Navigationssystem (10, 11) verbunden sind und an mindestens einer der Handhabungsstationen (2, 4) und in dem zwischen den Handhabungsstationen (2, 4) angeordneten Raum angeordnet sind, um die Flugbahn (A) zu definieren, wobei die Signalisierungsmittel (12) ausgebildet sind, die Handhabungsstationen (2, 4) und die Flugbahn (A) zu signalisieren.

6. System (1) nach Anspruch 5, **dadurch gekennzeichnet, dass** das Navigationssystem (10, 11) mindestens eines der folgenden Elemente umfasst:
- eine Antriebsvorrichtung, die ausgebildet ist, den Pfad zu speichern, der die Flugbahn (A) definiert, und die Drohne (6) bei der Handhabung entlang der Flugbahn (A) zwischen einer der Handhabungsstationen (2, 4) und der anderen der Handhabungsstationen (2, 4) zu steuern, wobei die Antriebsvorrichtung dem Grundrahmen (9) zugeordnet ist;
- Bilderfassungsmittel (10), die geeignet sind, Bilder zu erfassen, die für den Bereich um die Drohne (6) herum relevant sind, um die Packungen (3) und die Palette (5) zu erfassen, wobei die Bilderfassungsmittel (10) dem Grundrahmen (9) zugeordnet sind;
- Detektionsmittel (11), die betriebsmäßig mit den Signalisierungsmitteln (12) verbunden und ausgebildet sind, die Position der Handhabungsstationen (2, 4) und die Flugbahn (A) zu detektieren;
- mindestens eine Verwaltungseinheit, die betriebsmäßig mit der Antriebsvorrichtung, den Bilderfassungsmitteln (10) und den Detektionsmitteln (11) verbunden und ausgebildet ist, die Drohne (6) entlang der Flugbahn (A) zu steuern.

7. System (1) nach Anspruch 6, **dadurch gekennzeichnet, dass** die Bilderfassungsmittel (10) mindestens eine Kamera oder 3D-Vision-Sensoren umfassen.

8. System (1) nach Anspruch 6 oder 7, **dadurch gekennzeichnet, dass** die Detektionsmittel (11) mindestens einen Näherungssensor oder mindestens eine entfernt angeordnete Sensorvorrichtung zum Erfassen von Annäherungen umfassen.

9. System (1) nach Anspruch 8, **dadurch gekennzeichnet, dass** der Näherungssensor (11) ausgewählt ist aus: Laser-Näherungssensoren, Infrarot-Näherungssensoren, Ultraschall-Näherungssensoren, Mikrowellen-Näherungssensoren und elektromagnetischen Näherungssensoren.

10. System (1) nach einem oder mehreren der vorhergehenden Ansprüche, **dadurch gekennzeichnet, dass** es umschaltbar ist zwischen:
- einer Palettierkonfiguration, in der die Drohne (6) ausgebildet ist, die Packungen (3) von einer der Handhabungsstationen (2, 4) ohne die Palette (5) aufzunehmen und die auf der Palette (5) gestapelten Packungen (3) zu tragen, wobei die Palette (5) auf der anderen der Handhabungsstationen (2, 4) angeordnet ist; und
- einer Depalettierungskonfiguration, bei der die Drohne (6) ausgebildet ist, die an einer der Handhabungsstationen (2, 4) angeordneten Packungen (3) aufzunehmen und die Packungen (3) an der anderen der Handhabungsstationen (2, 4) ohne die Palette (5) zu tragen.

## Revendications

1. - Système de palettisation et/ou de dépalettisation (1) de paquets (3) ou de marchandises, comprenant :
- au moins un premier poste de manipulation (2) d'une pluralité de paquets (3) à palettiser/dépalettiser, ledit au moins un premier poste de manipulation (2) étant fixé au sol et comportant une courroie transporteuse, ou un élément rouleau, qui permet auxdits paquets (3) disposés sur elle de se déplacer vers l'avant ;
- au moins un second poste de manipulation (4) ;
- au moins une palette (5) disposée audit au moins un second poste de manipulation (4), ladite au moins une palette (5) étant agencée pour supporter lesdits paquets (3) à palettiser/dépalettiser ;
- des moyens de transfert (6) desdits paquets (3) à palettiser/dépalettiser entre ledit au moins un premier poste de manipulation (2) et ledit au moins un second poste de manipulation (4),
lesdits moyens de transfert (6) comprenant au moins un drone (6) ayant au moins un préhenseur (7) agencé pour saisir/libérer lesdits paquets (3) à palettiser/dépalettiser, ledit drone (6) étant mobile le long d'au moins une trajectoire aérienne (A) pour transférer lesdits paquets (3) à palettiser/dépalettiser entre ledit au moins un premier poste de manipulation (2) et ledit au moins un second poste de manipulation (4) ; **caractérisé par le fait que** ledit au moins un second poste de manipulation (4) est fixé au sol et comporte une courroie transporteuse, ou un élément rouleau, qui supporte ladite au moins une palette (5) et permet à ladite au moins une palette (5) disposée sur elle de se déplacer vers l'avant, et **par le fait que** le système de palettisation et/ou de dépalettisation (1) comprend au moins un élément réticulaire (8) disposé à une distance prédéfinie du sol et agencé pour définir au moins une zone de sécurité, située entre le sol et ledit élément réticulaire (8) et dépourvue de manipulation dudit drone (6) à l'intérieur de celle-ci, et au moins une zone de travail, située au-dessus dudit élément réticulaire (8) et dans laquelle ledit drone (6) est mobile le long de ladite trajectoire aérienne (A), ladite trajectoire aérienne (A) étant définie entre ledit au moins un premier poste de manipulation (2) et ledit au moins un second poste de manipulation (4), et inversement, et s'étendant sensiblement au-dessus dudit élément réticulaire (8) dans la zone de travail.

2. - Système (1) selon la revendication 1, **caractérisé par le fait que** ledit drone (6) comprend au moins un châssis de base (9) agencé pour supporter ledit préhenseur (7) et au moins un système de navigation (10, 11) adapté à la navigation et à la manipulation dudit drone (6) le long de ladite trajectoire aérienne (A).

3. - Système (1) selon la revendication 2, **caractérisé par le fait que** ledit préhenseur (7) est mobile en rotation autour d'un axe de rotation relatif (B), ledit axe de rotation (B) étant sensiblement transversal audit châssis de base (9).

4. - Système (1) selon une ou plusieurs des revendications précédentes, **caractérisé par le fait que** ledit préhenseur (7) comprend au moins une paire d'éléments bras (7a) aptes à être passés entre une configuration de préhension, dans laquelle lesdits éléments bras (7a) sont rapprochés l'un de l'autre pour la préhension d'au moins un desdits paquets (3) disposés sur l'un desdits postes de manipulation (2, 4), et une configuration de libération, dans laquelle lesdits éléments bras (7a) sont écartés l'un de l'autre pour la libération dudit paquet (3) sur l'autre desdits postes de manipulation (2, 4).

5. - Système (1) selon une ou plusieurs des revendications précédentes, **caractérisé par le fait qu'**il comprend des moyens de signalisation (12) reliés de manière fonctionnelle audit système de navigation (10, 11) et disposés à au moins un desdits postes de manipulation (2, 4) et dans l'espace situé entre lesdits postes de manipulation (2, 4) pour définir ladite trajectoire aérienne (A), lesdits moyens de signalisation (12) étant agencés pour signaler lesdits postes de manipulation (2, 4) et ladite trajectoire aérienne (A).

6. - Système (1) selon la revendication 5, **caractérisé par le fait que** ledit système de navigation (10, 11) comprend au moins l'un parmi :
- un dispositif de propulsion agencé pour mémoriser la trajectoire définissant ladite trajectoire aérienne (A) et pour piloter ledit drone (6) pour la manipulation le long de ladite trajectoire aérienne (A) entre l'un desdits postes de manipulation (2, 4) et l'autre desdits postes de manipulation (2, 4), ledit dispositif de propulsion étant associé audit châssis de base (9) ;
- des moyens d'acquisition d'image (10) agencés pour acquérir des images en rapport à la zone entourant ledit drone (6) pour la détection desdits paquets (3) et de ladite palette (5), lesdits moyens d'acquisition d'image (10) étant associés audit châssis de base (9) ;
- des moyens de détection (11) reliés de manière fonctionnelle auxdits moyens de signalisation (12) et agencés pour détecter la position desdits postes de manipulation (2, 4) et ladite trajectoire aérienne (A) ;
- au moins une unité de gestion reliée de manière fonctionnelle audit dispositif de propulsion, auxdits moyens d'acquisition d'image (10) et auxdits moyens de détection (11) et agencée pour piloter ledit drone (6) le long de ladite trajectoire aérienne (A).

7. - Système (1) selon la revendication 6, **caractérisé par le fait que** lesdits moyens d'acquisition d'image (10) comprennent au moins l'un parmi une caméra et des capteurs de vision 3D.

8. - Système (1) selon la revendication 6 ou 7, **caractérisé par le fait que** lesdits moyens de détection (11) comprennent au moins un parmi au moins un capteur de proximité et au moins un dispositif de télédétection de proximité.

9. - Système (1) selon la revendication 8, **caractérisé par le fait que** ledit capteur de proximité (11) est choisi parmi : des capteurs de proximité laser, des capteurs de proximité infrarouge, des capteurs de proximité à ultrasons, des capteurs de proximité à micro-ondes et des capteurs de proximité électromagnétiques.

10. - Système (1) selon une ou plusieurs des revendications précédentes, **caractérisé par le fait qu'**il est apte à passer entre :
- une configuration de palettisation, dans laquelle ledit drone (6) est agencé pour saisir lesdits paquets (3) à partir de l'un desdits postes de manipulation (2, 4) dépourvu de ladite palette (5) et pour supporter lesdits paquets (3) empilés sur le dessus de ladite palette (5), ladite palette (5) étant disposée sur l'autre desdits postes de manipulation (2, 4) ; et
- une configuration de dépalettisation, dans laquelle ledit drone (6) est agencé pour saisir lesdits paquets (3) disposés à l'un desdits postes de manipulation (2, 4) et pour supporter lesdits paquets (3) sur l'autre desdits postes de manipulation (2, 4) dépourvu de ladite palette (5).
